# EUROPEAN PATENT SPECIFICATION

(11) **EP 3 371 348 B1**
(45) Date of publication and mention of the grant of the patent: **19.03.2025**
(21) Application number: 16861147.3
(22) Date of filing: 02.11.2016
(51) Int. Cl.: C23F 13/20, C23F 13/06

(54) **CATHODIC CORROSION PROTECTION**
KATHODISCHER KORROSIONSSCHUTZ
PROTECTION CATHODIQUE CONTRE LA CORROSION

(30) Priority: 03.11.2015 US 201562250153 P
(43) Date of publication of application: 12.09.2018
(60) Divisional application: 25155900.1
(73) Proprietor: Vector Corrosion Technologies Ltd, Winnipeg, MB R3Y 1G4 (CA)
(72) Inventor: SIMPSON, David, Winnipeg, Manitoba R3Y 1G4 (CA); SERGI, George, Walsall, West Midlands WS5 3HZ (GB); RATHOD, Tejal, Birmingham, West Midlands B28 0NU (GB); WHITMORE, David, Winnipeg, Manitoba R3T 3E5 (CA)
(74) Representative: Barker Brettell LLP
(86) International application number: PCT/CA2016/051270
(87) International publication number: WO 2017/075699

(56) References cited:
- GB-A- 2 426 008
- JP-A- 2006 037 118
- US-B2- 7 264 708
- US-B2- 8 961 746
- US-B2- 8 961 746
- US-B2- 8 968 549

## Description

This invention relates to a method for cathodically protecting and/or passivating a metal section in an ionically conductive material and to an assembly for cathodically protecting and/or passivating a steel metal section in an ionically conductive material.

### BACKGROUND OF THE INVENTION

Impressed current systems using a battery are known. Such impressed current systems can use other types of power supply including common rectifiers which rectify an AC voltage from a suitable source into a required DC voltage for the impressed current between the anode and the steel. It is also known to provide solar panels to be used in a system of this type.

In all cases such impressed current systems require regular maintenance and checking of the status of the power supply to ensure that the power supply does not fail leading to unexpected and unacceptable corrosion or overprotection of the steel within the structure to be protected. While such maintenance can be carried out and the power supply thus ensured, this is a relatively expensive process.

Alternatively galvanic systems can be used which avoid necessity for any power supply since the voltage between the steel and the anode is provided by selecting a suitable material for the anode which is sufficiently electro-negative to ensure that a current is generated to provide corrosion protection. These systems have obtained considerable success and are widely used.

There are two primary limitations of ordinary galvanic anodes as used in steel reinforced concrete. The first relates to the mass of zinc per anode which, depending on the required current output, limits the useful life of the anode. The second is the actual current output of the anode which may or may not be sufficient to halt corrosion of the steel. The current output is limited by the driving voltage, which is essentially a fixed property and varies with exposure conditions, age of the anode, and build-up of corrosion products over time.

Reference is also made to US patents 8961746 (Sergi) issued February 24th 2015, 8968549 March 3 2015 (Sergi) and 7264708 (Whitmore) issued September 4 2007 the disclosures of which may be referenced for more relevant information.

### SUMMARY OF THE INVENTION

According to a first aspect of the invention there is provided a method for cathodically protecting and/or passivating a metal section in an ionically conductive material, the method being as defined by claim 1. The method comprises:
providing a non-sacrificial anode for communication of an electrical current to the metal section in the ionically conductive material where the non-sacrificial anode is of a material which is not sacrificial to the metal section; providing a storage component of electrical energy with two poles for communicating electrical current generated by release of the electrical energy; wherein the storage component is contained within an outer casing having an exterior surface; electrically connecting one pole to the metal section, electrically connecting the other pole to the non-sacrificial anode and placing the non-sacrificial anode in ionic contact with the ionically conductive material such that the electrical current can flow from the storage component through the electrical connection to the metal section thus reducing a total amount of electrical energy contained in the storage component; wherein the non-sacrificial anode is defined on the exterior surface of the outer casing so that the storage component is connected as a common single unit with the non-sacrificial anode; and placing the non-sacrificial anode in ionic communication with the ionically conductive material.

According to a second aspect of the invention there is provided an assembly for cathodically protecting and/or passivating a steel metal section in an ionically conductive material, the assembly being as defined by claim 11. The assembly comprises: a non-sacrificial anode of a material which is not sacrificial to steel; a storage component of electrical energy with two poles for communicating electrical current generated by release of the electrical energy; wherein the storage component is contained within an outer casing having an exterior surface; an arrangement for electrically connecting one pole to the metal section; an arrangement for electrically connecting the other pole to the non-sacrificial anode; the assembly being arranged for placing the non-sacrificial anode in ionic contact with the ionically conductive material such that electrons can flow from the storage component through the electrical connecting arrangement to the metal section; wherein the non-sacrificial anode is defined on the exterior surface of the outer casing so that the storage component is connected as a single unit with the non-sacrificial anode.

The arrangement herein can be used where the anode is in the form of a plurality of associated anodes all connected to a cell or a battery of cells.

The storage component as defined above can be a cell or battery or battery of cells / batteries or it can be a capacitor or a supercapacitor or ultracapacitor which provides a system for storing charge different from conventional electrolytic cells or batteries. A supercapacitor is a high-capacity electrochemical capacitor with capacitance values much higher than other capacitors. These capacitors typically have lower voltage limits than standard or conventional capacitors. They typically store 10 to 100 times more energy per unit volume or mass than standard capacitors, can accept and deliver charge much faster than batteries, and tolerate many more charge and discharge cycles than rechargeable batteries. Supercapacitors do not use the conventional solid dielectric of standard capacitors. They use electrostatic double-layer capacitance or electrochemical pseudo-capacitance or a combination of both instead. Electrostatic double-layer capacitors use carbon electrodes or derivatives with much higher electrostatic double-layer capacitance than electrochemical pseudo-capacitance, achieving separation of charge in a Helmholtz double layer at the interface between the surface of a conductive electrode and an electrolyte. The separation of charge is of the order of a few ångströms (0.3-0.8 nm), much smaller than in a conventional capacitor.

Supercapacitors are a great advancement on normal capacitors being capable of storing a high charge once fully charged. The capacity of a 2.7V 200F supercapacitor is capable of holding a charge of the order of over 500C (A x seconds). Typical cathodic protection systems require around 170 to 400C/m² of steel per day so such a capacitor is able to provide, when fully charged, enough charge to protect 1m² or more of steel for a day. This represents 2-5mA/m² current density. In order for example to double this figure then we need to double the capacitance to around 400 F. If the capacitor is recharged on a daily basis, then logistically a system utilising supercapacitors of this size spaced at intervals to provide current for 1m² or more of steel can be an effective cathodic protection system. Daily recharging can easily be provided by solar panels, for example, but other means of producing reasonably regular bursts of current could be used as charging components for the supercapacitors. An example of such could be piezoelectric materials which can be incorporated in roads, parking garages, bridges, runways etc. enabling current to be generated by loading and / or movement of the structure or vehicles passing over them.

That is, piezoelectric materials could be used to generate electricity to power an impressed current system directly, or to charge / recharge batteries or capacitors / supercapacitors.

High current output is required from the storage component such as a battery. In the claimed invention, one pole is connected to the metal section to be protected. Electrons flow from the storage component to the metal section such that corrosion of the metal section is reduced. The other pole is connected to the non-sacrificial anode, which the claimed invention requires to be defined on the exterior surface of the outer casing of the storage component. In the case of a zinc-alkaline battery the polarity of the battery is such that the case of the battery, if it is made of a suitable material will act as the anode and will be able to distribute the necessary current through the ionically conductive material such as mortar or concrete. Other batteries, such as most lithium batteries, typically have only a small pole which has the proper polarity which may not be large enough to deliver the required current into the ionically conductive material. The non-sacrificial anode may encase or coat the whole exterior surface of the outer casing of the storage component such as a battery or capacitor. Anodes can be made of any inert conductive material such as MMO coated titanium or other noble metal or sub-metal, conductive coating, conductive ceramic material etc. and can be embedded in an alkaline mortar or an inert material such as sand which may be dosed with an alkali solution. Stainless steel can also be a suitable current carrier when embedded in mortar or compacted sand dosed with alkali such as a saturated solution of lithium hydroxide.

Preferably in some embodiments the storage component is initially charged or is subsequently re-charged while in situ that is while in contact with the ionically conductive material. The arrangement may include or preferably includes automatic switching systems to effect the periodic charging process. For example the storage component can be charged by a solar cell or by an outside power source such as a second battery or a power supply. Also in some cases there may be provided a system which operates to subsequently automatically and repeatedly or periodically carry out the re-charge.

In another case, the storage component is subsequently re-charged by a recharging power supply which is an integral unit with the anode and the storage component. However the system also may operate as a periodic maintenance programme where a power supply is brought into operation periodically as required to effect the re-charging of an anode assembly or a set of anode assemblies in a structure.

Preferably the storage component is subsequently re-charged by applying voltage directly between both terminals or between a first connection to a terminal of the storage component and a second connection to the metal section.

The claimed invention requires that the storage component is contained within an outer casing having an exterior surface, and that the non-sacrificial anode is defined on the exterior surface of the outer casing so that the storage component is connected as a common single unit with the non-sacrificial anode.

In one arrangement the storage component is connected to the metal section and is charged, in an initial charging step or in a subsequent re-charging, after installation by a connection to the one terminal and a second connection to the metal section. This method of connection acts to pass extra current to the metal section during the charging or re-charging step to passivate the metal section or reduce future current requirement to maintain passivity or mitigate corrosion of the metal section.

The method of the claimed invention requires placing the non-sacrificial anode in ionic communication with the ionically conductive material. Typically the common single unit comprising the storage component and the anode or anodes is at least partly buried in the ionically conductive material. However application to the surface or other modes of mounting where the anode is in ionic contact with the material can be used.

In one particularly preferred arrangement the storage component comprises a cell with an outer case wherein the case is fully or partially formed of the anode material so that the anode is formed by the outer case either by an outer surface of the same material or as a coating or layer on the exterior of the case. In this arrangement the anode forms directly the outer case of the cell where the case contains and houses the cathode material of the cell the electrolyte, the anode material and other components of the cell. That is, in this embodiment, the anode is defined by a layer or coating on the outer (i.e. exterior) surface of the outer casing of the storage component itself or actually as the outer surface of the outer casing of the storage component and not as an additional element which is separate from the casing of the storage component. The anode material may cover the whole surface or may be a partial covering leaving other areas exposed.

The above features can be preferably used for protection of steel reinforcing or structural members in concrete or mortar material where it is well known that corrosion can cause breakdown of the concrete due to the expansive forces of the corrosion products and due to the reduction to the steel strength. However, uses in other situations can arise.

The term impressed current anode used herein is intended to distinguish from a sacrificial anode where the sacrificial anode is formed of a material, typically of zinc, which is less noble than the metal section so that it preferentially corrodes relative to the metal section to be protected. The impressed current anode is one which is used in conjunction with an external power supply and does not need to be less noble than the metal section. Typically such impressed current anodes are formed of titanium, platinum, niobium, carbon and other noble metals and oxides which do not corrode readily.

The assembly and methods disclosed herein are preferably designed for use where the metal section is steel and the ionically conductive material is concrete or mortar.

The power supply may include a solar panel which drives the impressed current anode and rechargeable galvanic anode so as to provide long term protection when the solar power is on and off.

The construction and methods proposed herein are designed particularly where the metal section is steel and the ionically conductive material is concrete or mortar. However the same arrangements may be used in other corrosion protection systems such as for pipes or other constructions in soil, and in many other systems where such anodes can be used.

Preferably the assembly includes a reinforcing layer, such as disclosed in US Patent 7,226,532 issued June 5 2007 to Whitmore, to which reference may be made for further details not disclosed herein, to restrain and resist forces such as expansion, contraction and deformation forces which may be caused by corrosion of the anodes, deposition of sacrificial anode ions and other physical / environmental forces such as freezing, thawing, wetting, drying and thermal expansion / contraction.

### BRIEF DESCRIPTION OF THE DRAWINGS

Embodiments which assist understanding of the invention as claimed will now be described in conjunction with the accompanying drawings, in which:
Figure 1 is a schematic illustration of a corrosion protection method according to the present invention using a first arrangement of anode apparatus.
Figure 2 is the schematic illustration of Figure 1 showing the connection of the components for operation in impressed current corrosion protection mode.
Figure 3 is a schematic illustration of a corrosion protection method using a second arrangement of anode apparatus, which is unclaimed.
Figure 4 is a schematic illustration of a corrosion protection method according to the present invention using a third arrangement of anode apparatus.
Figure 5 is a schematic illustration of a corrosion protection method according to the present invention using a fourth arrangement of anode apparatus, showing a connection of the components for re-charging.
Figure 6 is the schematic illustration of another arrangement of Figure 1 which can be used showing an alternative connection of the components for re-charging.
Figure 7 is a schematic illustration of a corrosion protection method according to the present invention using a further arrangement of anode apparatus.
Figure 8 is a schematic illustration of a further arrangement of the anode apparatus, which is unclaimed.
Figure 9 is a schematic illustration of a further embodiment of corrosion protection method according to the present invention using another arrangement of anode apparatus.
Figure 10 is a schematic illustration of a further embodiment of corrosion protection method according to the present invention using another arrangement of anode apparatus in which the apparatus uses a supercapacitor which is recharged using a piezo-electric charging system.
Figures 11 and 12 are battery anode progress graphs of voltage and current vs time for the battery casing directly inserted in the hole in the concrete slab with Figure 10 showing a graph relating to a second battery connected in series to the first battery as described in the first set of examples.
Figure 13 shows a graph of results for an assembly as described herein with a battery and a MMO coated titanium anode showing current before (as received) and after recharging where the results are set out in Tables 1 and 2 hereinafter.
Figure 14 shows a graph of results for an assembly as described herein with a battery and a Zn anode, which is unclaimed, showing current before (as received) and after recharging where the results are set out in Tables 3 and 4 hereinafter.

In the drawings like characters of reference indicate corresponding parts in the different figures.

### DETAILED DESCRIPTION

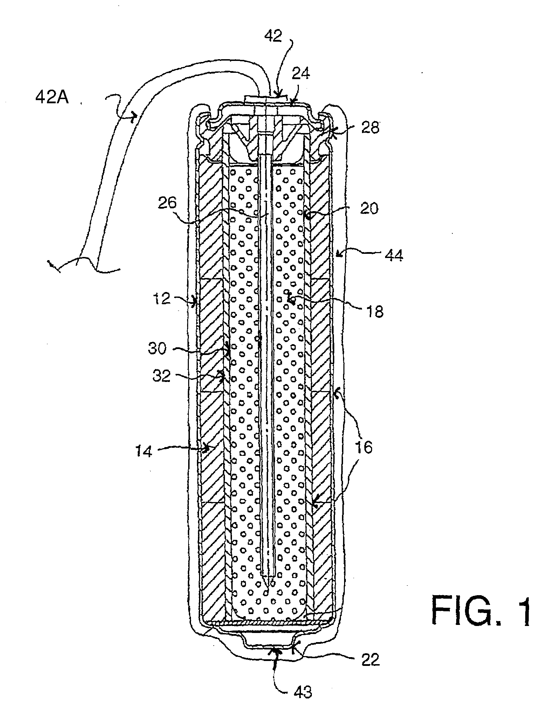

As shown in Figure 1, a typical alkaline manganese dioxide-zinc rechargeable cell comprises the following main units: a steel can 12 defining a cylindrical inner space, a manganese dioxide cathode 14 formed by a plurality of hollow cylindrical pellets 16 pressed in the can 12, a zinc anode 18 made of an anode gel and arranged in the hollow interior of the cathode 14, and a cylindrical separator 20 separating the anode 18 from the cathode 14. The ionic conductivity (electrolyte) between the anode and the cathode is provided by the presence of potassium hydroxide, KOH, electrolyte added into the cell in a predetermined quantity. Other types of rechargeable cells comprise similar main components (can, cathode, anode, separator and electrolyte) but the composition of the components may differ. Some of the types of cell may however be of a different construction such as lead/acid cells or lithium cells.

The can 12 is closed at the bottom, and it has a central circular pip 22 serving as the positive terminal. The upper end of the can 12 is hermetically sealed by a cell closure assembly which comprises a negative cap 24 formed by a thin metal sheet, a current collector nail 26 attached to the negative cap 24 and penetrating deeply into the anode gel to provide electrical contact with the anode, and a plastic top 28 electrically insulating the negative cap 24 from the can 12 and separating gas spaces formed beyond the cathode and anode structures, respectively.

The material of separator 20 consists of two different materials, i.e.: a first material 30 made of fibrous sheet material wettable by the electrolyte, and a second material 32 being impermeable to small particles but retaining ionic permeability. An expedient material for the first layer is a sheet material of non-woven polyamide fiber, which is absorbent and serves as a reservoir for electrolyte. The macro-porous structure of the absorbent layer cannot prevent internal shorting by zinc dendrites or deposits during discharge/charge cycling.

Shorting is prevented by the second 32 material which may be a layer or layers of micro-porous or non-porous material which may be laminated to or coated onto the fibrous sheet material. One suitable material is one or more cellophane membranes laminated to the non-woven polyamide sheet. Another is one or more coatings of regenerated cellulose or viscose coated onto and partially impregnating the non-woven polyamide sheet, resulting in a composite material.

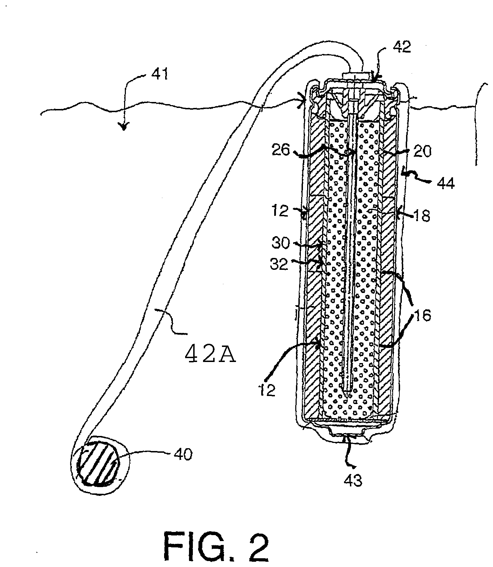

Other types of rechargeable cells may be used. In the present arrangement, the type described above is used in a method for cathodically protecting and / or passivating a metal section such as steel reinforcing bar 40 in an ionically conductive material such as concrete 41. The cell therefore includes a first terminal 42 and a second terminal 43 defined by the outer casing 12. The first terminal 42 is connected to the pin or nail 26 which is engaged into the anode material 18. The terminal 42 connects to a connecting wire 42A which extends from the anode material 18 for connection to the steel reinforcing bar 40, as shown in figure 2. In practice the pin 26 and the wire 42A together with the terminal 42 may all form an integral structure where the wire extends into the anode material in the form of the pin 26 or is sufficiently welded, soldered, clamped or otherwise electrically connected. This is to ensure an effective connection between the wire 42A and the anode material 18.

In figure 1, anode 44 is applied as a coating onto the casing 12 of the cell. The anode 44 is of an inert material so that it is more noble than steel. Examples of such materials are well known. Thus the anode material 44 does not corrode or significantly corrode during the cathodic protection process.

The terminal 42 is connected to the steel reinforcement 40 by the wire 42A. Other electrical connection methods and materials may be used. The wire may comprise steel, copper, brass or titanium. The wire may comprise a layer of a second metal or alloy or a layer of insulation. The second terminal defined by the casing is connected to the anode by the contiguous surface therebetween. As shown in figure 2, the anode 44 is placed in contact with the ionically conductive material or concrete 41 so that electrons can flow from the cell through the electrical connector 43 to the metal section 40.

In this arrangement the application of the anode 44 onto the outside surface of the casing 12 provides the structure as a common single unit where the anode is directly connected to the cell and forms an integral element with the cell. Anode 44 may comprise one or more layers and may include a mixed metal oxide (MMO), catalytic or sub-oxide layer.

In this embodiment, as the anode is formed of an inert material which does not corrode in the protection process, the anode and the cell contained therein can be directly incorporated or buried in to the concrete or other ionically conductive material without the necessity for an intervening encapsulating material such as a porous mortar matrix. As there are no corrosion products there is no requirement to absorb such products or the expansive forces generated thereby. As the process does not depend upon continued corrosion of a sacrificial anode, there is no necessity for activators at the surface of the anode. As the chemical reaction at the surface of any inert anode during operation generates acid (or consumes alkali) it is beneficial for the anode to be buried in an alkaline material such as concrete or high alkalinity mortar to prevent material near the anode from becoming acidic. If desired, additional alkali may be added to the concrete or other material the anode is in contact with.

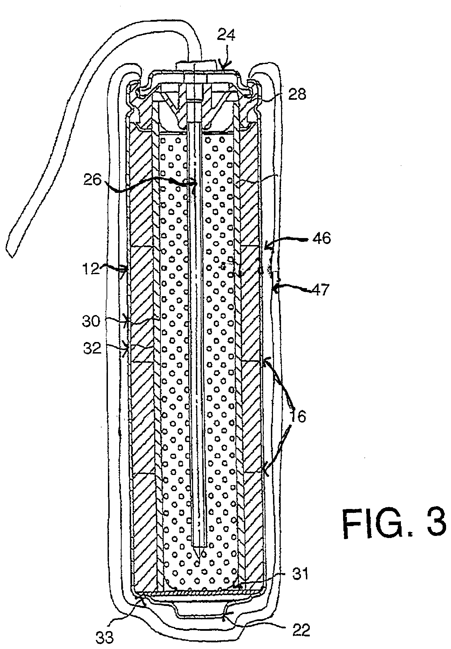

Turning now to figure 3 there is shown an alternative arrangement where the same cell is connected to and uses an anode 46 formed of a sacrificial material such as zinc. This arrangement is described but not claimed. Again, the anode is applied as a coating onto the outside surface of the casing. Around the sacrificial anode 46 is provided a porous or reinforced matrix 47 which is arranged to absorb any expansive forces caused by the corrosion of the sacrificial anode 46 and which may contain activators of a conventional construction for ensuring continued corrosion of the sacrificial material.

In another embodiment (not illustrated) the casing 12 is formed of a suitable inert material more noble than steel and thus there is an inert anode 44 defined by the casing. The sacrificial material of the anode 46 is formed as a thin coating or a separate body which corrodes away after a relatively short period of time, leaving the inert anode 44 defined by the casing to continue further cathodic protection. In this way the inert anode defined by the casing is collated with or in electrical contact with the body of the sacrificial anode material 46 and the anode material acts to provide an initial boost of current until the sacrificial anode material is consumed, following which the further cathodic protection is obtained by the current discharge through the inert anode defined by the casing 12.

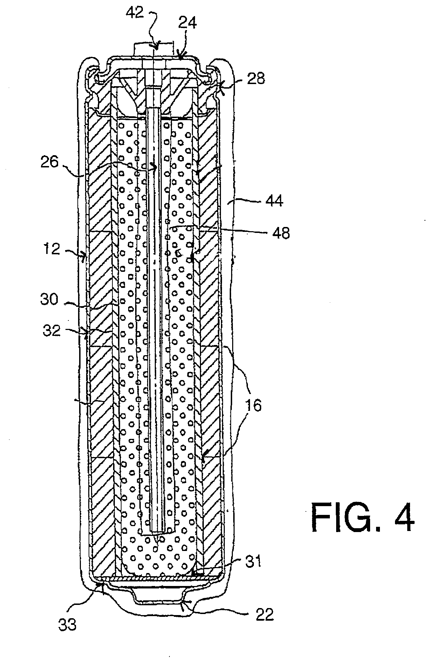

In figure 4 is shown a further embodiment which uses the inert anode 44 but provides an interior supply 48 of solid zinc within the cell so as to ensure longevity of operation due to the presence of sufficient zinc and cathode material within the system to maintain the current flow from the cell through the anode 44 and through the terminal 42 to ensure the cathodic protection of the steel 40. The zinc may be cast rolled, pressed or otherwise formed.

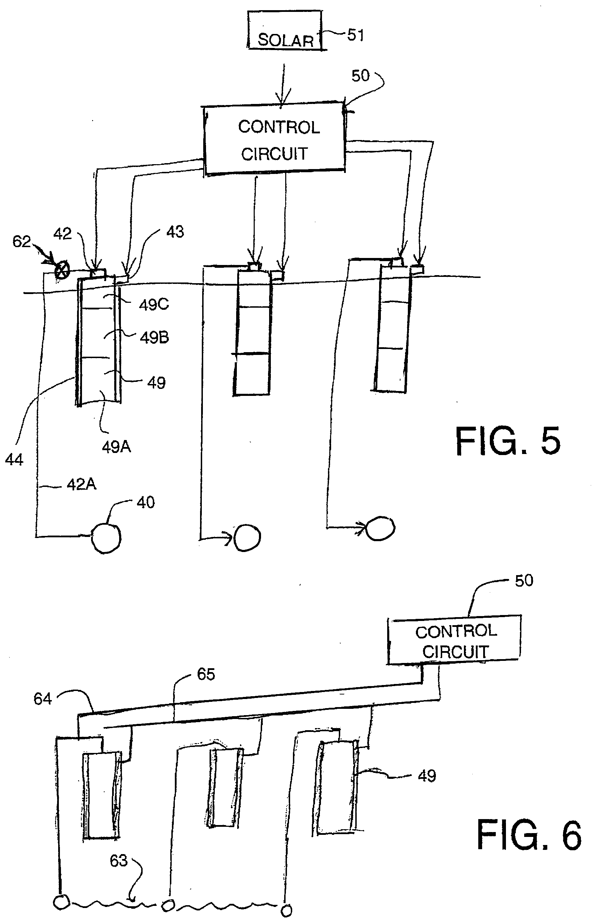

Turning now to figure 5 there is shown a system for recharging the batteries or cells of the type shown in figure 1. It will be appreciated that the combination forming the anode assembly can be formed by a single cell where the casing of the cell directly surrounds the cell and is directly attached to the anode. In other arrangements schematically shown in figure 5 the current is supplied by a battery 49 defined by separate cells 49A, 49B and 49C. The cells can be constructed in any suitable arrangement and the assembly into a battery is shown only schematically in figure 5. The construction includes the non-sacrificial anode 44 which is located on an exterior casing of the battery 49. The battery includes the first terminal 42 and the second terminal 43.

A recharging system 50 is provided which can be used to recharge each of the batteries 49. The recharging system 50 can comprise a conventional rectifier type power source generating a suitable voltage output for connection across the batteries. Alternatively a solar source 51 can be used to generate electrical power which is controlled by the charger 50 to be applied to the batteries 50.

Each of the cells is constructed in a manner which allows the cell to be recharged. Such rechargeable cells are of course well-known and their construction is available from many different prior disclosures.

In the arrangement shown in figure 5 each of the batteries is embedded within the concrete in a manner which leaves the terminals 42 and 43 or electrical connections to these terminals exposed for connection to the battery charger 50. The terminals may comprise simply contact points or wires and it is not intended that the terminals require any particular construction or require any connection component for connection to the output leads or connectors on the charger. It is simply required that there be a connection when required between the charger and the battery.

With the batteries in place in the concrete the charger can be used to recharge each of the batteries while those batteries remain in place. The charger 50 can be arranged for connection to the plurality of batteries within a structure and can be arranged to provide repeated automatic recharging of those batteries at set periods to ensure that the voltage of the batteries remains at a required level. Alternatively the system may be managed as part of a maintenance system so that the batteries are recharged manually by manual connection when required, for example after a known period during which it is expected that discharge to an unacceptably low capacity will occur.

As indicated at 62 is provided a switch or disconnect mechanism which is used to disconnect the cell from the metal section 40 in the event that it is required that no additional current is supplied to the metal section during the charging process.

In Figure 5 is shown that the recharging process is carried out by applying a voltage between the terminal 42 and the terminal 43 of the battery. However it will be appreciated that it is also possible to carry out the recharging by providing a connection to the battery at the casing or at the anode 44 and a further connection to the terminal 42 or to the wire which connects to the steel 40 or directly to the steel 40. If the steel within the structure is electrically interconnected, multiple batteries may be charged by using a single connection to the steel 40 in combination with connection to terminal 43 of multiple batteries.

In Figure 6 is shown another arrangement where the charger 50 is connected to charge the batteries 49 using only two wires 64 and 65 so that a single wire 64 is connected to the steel at one of the steel bars in a case where there is an electrical interconnection between all of the steel bars.

It will further be appreciated that the recharging after installation by an electrical connection of the charger to terminals 42 and 43 while terminal 42 is electrically connected to the metal section 40 will act to pass extra current to the metal section during charging. This will cause passivation of the metal section or reduce future current requirements after the recharging process is complete to maintain passivity or to mitigate corrosion of the metal section.

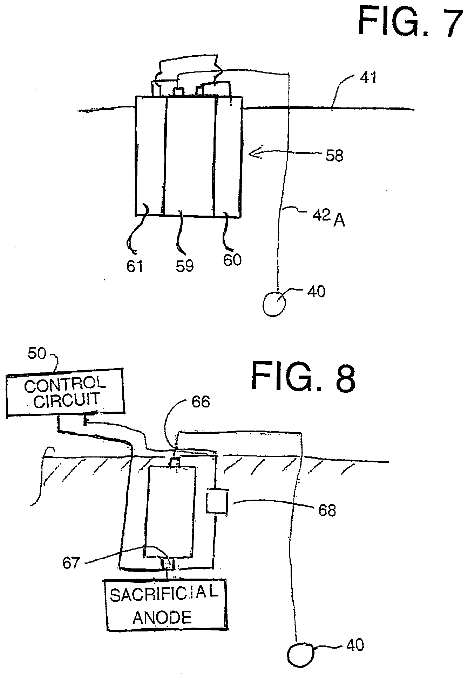

In Figure 7 is shown an alternative arrangement 58 where there is provided a cell 59 which is connected to an anode 60 and to the steel 43 and is also connected to a recharging system 61 so as to form an integral construction of these components. Therefore it is not necessary for the anode 60 to surround the cell 59 but the anode can lie alongside or adjacent to the cell. The claimed invention requires that the storage component (in this embodiment, cell 59) is contained within an outer casing having an exterior surface, wherein the non-sacrificial anode (anode 60) is defined on the exterior surface of the outer casing so that the storage component is connected as a common single unit with the non-sacrificial anode. The recharging system 61 forms an integral part of the system but does not need to be connected in any particular way to the cell. The recharging system 61 is shown as also contained within or at least in contact with the concrete 41 but of course this is not necessary. The recharging system may include solar panels, batteries, and transformer rectifiers to convert AC to DC power, DC power supplies or other battery chargers.

In Figure 8 there is shown a further alternative arrangement in which a sacrificial anode and a battery or cell are not a combined unit and are mounted separately in the concrete and connected by an electrical connection. This arrangement is described but not claimed. One pole of the cell is therefore connected to the steel 40 and the other pole is connected to the sacrificial anode as shown. In this case the battery is re-charged by the charger 50 which is connected at the terminals 66 and 67. An electrical switching mechanism 68 such as a field effect transistor (FET) is provided connected between the terminals 66 and 67 which switches to be a closed circuit and allows the sacrificial anode to operate in galvanic mode in the event that the battery voltage drops below a threshold and until the battery is re-charged periodically by the charger 50 being brought into the connection for re-charging as shown. The FET 68 operates to reopen the circuit from the closed circuit condition when the charging voltage is applied.

The system therefore can use rechargeable batteries of the type developed by Josef Daniel-Ivad. It has been found that the magnitude of the current that can be delivered to steel in concrete is sufficient to provide an effective protection even when using the above inert anode materials rather than the sacrificial zinc anode. The battery has been found also to provide a reasonable length of operation while delivering a realistic amount of current. In general the battery can provide a significant current using an AA size battery for a period of one to two years. The mean published power capacity an AA battery is around 2.35Ah and that of a D battery is 15Ah. A standard D battery would thus be expected to last approximately 6 to 12 years depending on the level of current output. It is realistic that a specially designed battery can be manufactured to last a minimum of 10 years. The D size battery is of realistic size and zinc mass to function to provide the current for the anode.

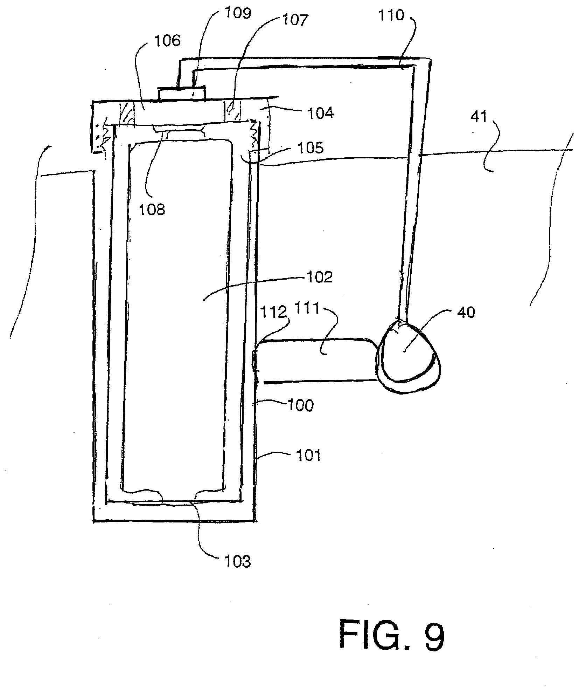

In Figure 9 is shown a schematic illustration of a further embodiment of corrosion protection method according to the present invention using a further arrangement of anode apparatus where the battery or other storage component for the charge is replaceable. This is shown as a casing or enclosure 100 with outer surface 101 forming the anode in the manner previously described. Thus the casing 100 can be formed entirely of anode material or may be covered by a layer of the anode material. Inside the casing is provided a cell 102 with one terminal 103 connected to the casing so as to electrically communicate therewith. The claimed invention requires the presence of a non-sacrificial anode and this must be defined on the exterior surface of the outer casing. The casing includes a top cover 104 which is arranged to be sealed onto a top opening 105 of the casing. The top cover 14 includes a centre terminal 106 insulated from the casing itself by suitable insulation 107. The terminal 106 includes a portion 108 connecting to the other terminal of the battery and a portion 109 connected to the wire 110 communicating with the steel 40. In this arrangement, instead of charging the battery 102, the battery can be replaced by removing the top cover and inserting a new battery into engagement with the casing at one terminal and with the cover at the other terminal of the battery. This replacement can be carried out while the casing remains in place within the concrete material 41 simply by providing the top cover in an exposed position. The casing 100 has its outer surface remaining in contact with the concrete.

The anode formed by the casing may have the required non-sacrificial anode material positioned outside, or otherwise separate from, a portion or layer of sacrificial anode material, so that cathodic protection provided by the required non-sacrificial anode is not interfered with by buildup of corrosion products from the sacrificial anode material (this embodiment is not claimed).

The assembly may be used with a non-conductive stand off or spacer 111 to prevent the anode from electrically contacting the steel resulting in a short circuit. The non-conductive standoff may be an integral part of the anode assembly and may be attached to the anode assembly for example by the attachment member 112. Attachment may be made at any suitable location on the anode assembly. The nonconductive standoff may be used to hold the anode in place during concrete placement. Nonconductive standoff may form a non-perforated layer between the anode and the steel to allow the anode to be installed close to the steel and maintain reasonably uniform ionic current distribution to the steel section. This arrangement is particularly important in patch repair where a section of the concrete is removed adjacent to the steel and the anode assembly is inserted into the opening or hole generated by the concrete removal. This arrangement is also important in new construction applications where the steel is exposed and it is desired to prevent contact between the anode assembly and the steel and provide more uniform current distribution to the steel. In these situations the location of the anode assembly should be controlled by the provision of a suitable standoff member 111 as described above.

Where a cylindrical anode assembly is used with a drilled hole, the drilled hole can be arranged to approximately match the shape of the anode assembly so that the provision of the spacer 111 is not required. A filler material can be inserted into the hole to provide ionic connection and maintain the anode assembly in position.

Notwithstanding that the claimed invention requires a non-sacrificial anode, in some arrangements as described herein, the storage component is also associated with a sacrificial anode (this embodiment is not claimed).

The storage component may be rechargeable or replaceable so as to extend the life of the anode assembly well beyond the life of a single charge of the storage component. At the same time, however, if the amount or positioning of sacrificial anode material generates sufficient corrosion products to reduce or halt the protection process, the recharging or replacement of the cell may no longer become effective. It is necessary therefore to choose an amount of sacrificial anode material which matches the ability of the assembly to continue to operate. This is overcome by providing the inert (i.e. non-sacrificial) anode material as part of the anode body, as a layer inside the sacrificial material. Thus when the sacrificial material is depleted before the operation of the system is degraded by the presence of corrosion products, the assembly continues to operate using the inert anode which has become exposed.

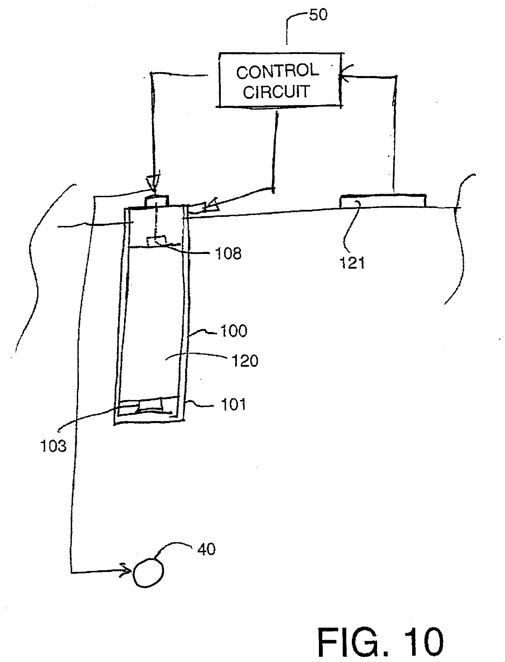

In Figure 10 is shown a further arrangement using a casing or enclosure 100 with outer surface 101 forming the non-sacrificial anode in the manner previously described. In this arrangement a storage component is provided by a supercapacitor 120 and is connected by the terminals 103 and 108 to the terminal 109 and the case 100 as previously described. In this embodiment the control circuit 50 receives charging current from a piezo-electric charging system 121 which is actuated by loading or movement of the concrete structure to which it is attached for example by the movement of vehicles. Such piezo-electric changing systems have previously been known and are available to persons skilled in this art for generating an ongoing current which can be applied to the supercapacitor for storage to replace current depleted to carry out the impressed current cathodic protection. The capacitor 120 is contained within the container 100 which provides the anode on the outer surface as an integral component therewith. Such capacitors typically have an outer container wall of a plastics material so as to protect and insulate the operating components and this can be inserted into the container 100 as a separate component, or the container and anode is formed onto the outer surface of the housing of the capacitor. The capacitor can be replaced if necessary by insertion of a new capacitor into the container.

Daily recharging can easily be provided by solar panels, for example, but other means of producing reasonably regular bursts of current could be used as charging components for the storage component such as the supercapacitor in this example. An example of such could be piezoelectric materials which can be incorporated in roads, parking garages, bridges, runways etc. enabling current to be generated by loading or movement of the structure or vehicles passing over them.

That is, piezoelectric materials could be used to generate electricity to power an impressed current system directly, or to charge / recharge batteries or capacitors / supercapacitors.

### EXAMPLES

The following examples further assist understanding of the claimed invention.

In one example a Duracell D size battery was stripped of its label and was directly inserted into a hole in a reinforced concrete slab of dimension 28 x 19 x 10.5 cm high. The bare metal casing of the battery was partially inserted into a 42mm diameter hole which was 38mm deep. The space between the battery and the inner surface of the hole was filled with ionically conductive gel comprised of lithium hydroxide, water and carboxymethylcellulose. The other terminal of the battery was connected to all of the steel bars in the concrete slab (four transverse and two longitudinal bars, each 2 cm in diameter) such that electrons flowed to the steel and the steel would be protected. An arrangement of this type when tested gave an initial current of around 3mA and maintained a current of over 1 mA for 145 days. The barrel itself is nickel coated steel which is not totally inert. Once there is a break in the nickel coating, corrosion of the steel will occur under the conditions that prevail at the surface of the metal.

This may be overcome, according to the invention, by providing a coating which is a more effective inert (non-sacrificial) anode material such as MMO coated titanium, titanium sub-oxide, platinum, niobium or any other such material. The steel barrel may also be replaced with a barrel which is wholly made of more effective inert anode material as listed above.

If the steel barrel is allowed to corrode, it will eventually perforate such that the battery is no longer a closed cell. If this happens, some or all of the ionic current from the anode of the battery may flow directly to the reinforcing steel instead of flowing to the cathode of the battery. This would compromise the added voltage of the battery, but it would allow the anode of the battery to continue to protect the reinforcing steel as a simple galvanic system.

A two battery setup can be used. In a second example, a sample as described above was prepared and a second battery was connected in series with the first battery. The casing of the first battery was directly inserted and used as the anode. This arrangement increased the driving voltage by a factor of two and surprisingly, the current to the steel reinforcement increased by a factor of three to four. Initial current was 9.5mA and a current of 3 to 4 mA was maintained for over 110 days. Further batteries (#3 and #4) were added in series to further increase the driving voltage. The increase in current to the steel reinforcement was roughly proportional to the increase in voltage.

In a further example, a D size battery was connected to various noble anode materials (according to the invention) and sacrificial anode materials (not according to the invention). These tested anode materials included MMO coated titanium, titanium sub-oxide tube, brass and zinc. Testing was completed on reinforced concrete blocks of the same dimensions as described above. The anodes were embedded in the concrete hole using ionically conductive gel. Batteries were electrically connected to the anode materials and to the reinforcing steel. The non-inert anodes, especially zinc, (unclaimed) delivered higher initial current than the inert anodes (claimed). Nonetheless a current of at least 1mA was achieved by all anodes.

In a further example, a stainless steel anode was used and was embedded in compacted sand dosed with a saturated solution of lithium hydroxide. The stainless steel anode was used to pass 30 to 50 mA current for a period of 14 days. Minimal corrosion was evident on the stainless steel anode surface after passing a total charge of 12.5 A-hrs of charge.

In yet a further series of examples, zinc alkaline rechargeable AA size batteries were connected to mixed metal oxide (MMO) coated titanium anodes (invention) and zinc anodes (unclaimed) which were partially embedded in ionically conductive gel in a hole in a reinforced concrete block as described above. In each case the anode was connected to the terminal marked + and the steel was connected to the terminal marked - on an as received rechargeable battery. Current flowing to the steel was recorded. The battery was then disconnected and discharged. After discharging the battery the voltage of the battery was measured to confirm it was discharged. The battery was then recharged and reconnected. The current was recorded after the battery was recharged. These steps were taken with both the inert MMO titanium anode (invention) and the sacrificial zinc anode (unclaimed).

The current produced when the battery was connected to the sacrificial anode (unclaimed) was greater than the current produced when the battery was connected to the inert MMO coated titanium anode (claimed). In both cases the current from the recharged battery exceeded the current from the original battery.

The concept of using a battery or a rechargeable battery of the type described herein is an improvement over the conventional galvanic anode available in the market. A current output of more than 1mA can be maintained for many weeks without a significant drop in the battery voltage, indicating that cathodic protection can be maintained for several years. An inert anode, such as MMO coated titanium, can be wrapped around, coated onto or otherwise electrically connected to the casing of the battery. Alternatively, the barrel of the battery may partially or fully comprise titanium and can be coated with MMO or titanium sub-oxide. A portion of sacrificial anode material such as zinc can be provided in combination with the required inert anode to provide additional current until the sacrificial portion is consumed (this embodiment is not claimed). The outer barrel of the battery can also be used as an impressed current anode in cases where an additional power supply is used to provide an initial charge to passivate the steel. Specially designed batteries can be modified to provide the desired parameters for this application such as low current, long life operation and to be more suitable for direct embedment into the concrete.

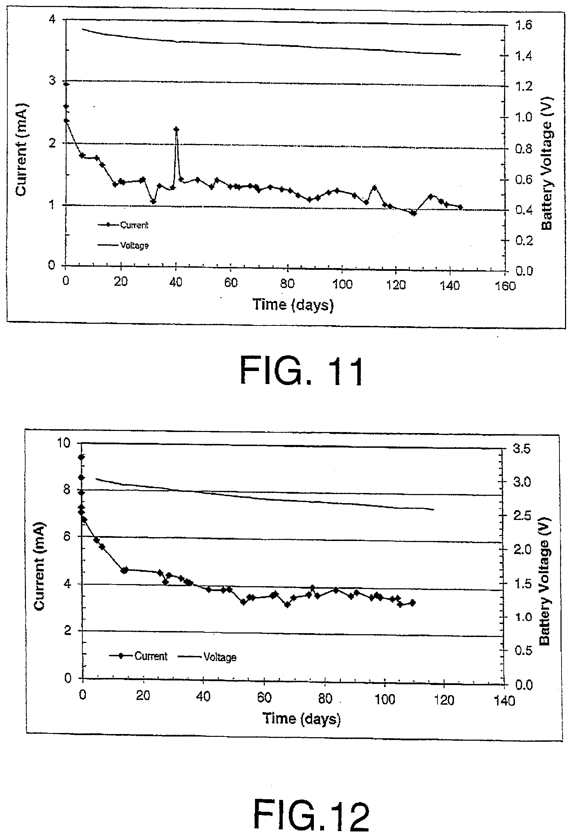

Figures 11 and 12 are battery anode progress graphs of voltage and current vs time for the battery casing directly inserted in the hole in the concrete slab with Figure 12 showing a graph relating to a second battery connected in series to the first battery as described in the first set of examples.

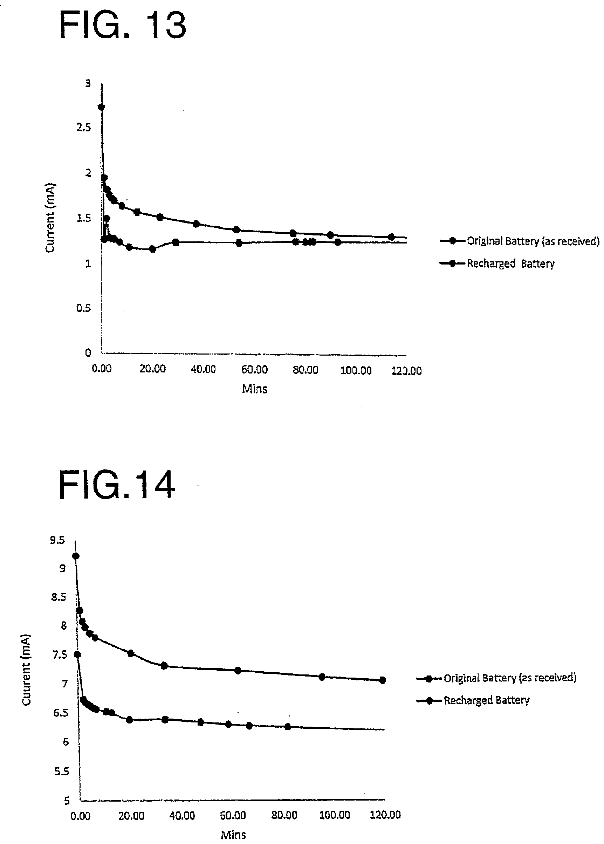

Figure 13 shows a graph of results for an assembly according to the invention as described herein with a battery and a MMO coated titanium anode showing current before (as received) and after recharging, based on the results set out hereinafter in Tables 1 and 2.

Figure 14 (not according to the claimed invention) shows tables and a graph of results for an assembly as described herein with a battery and a Zn anode showing current before (as received) and after recharging, based on the results set out hereinafter in Tables 3 and 4.

**TABLE 1**

| Ti MMO | | | |
|---|---|---|---|
| Area of Ti MMO exposed 6cm2 | | | |
| Battery Igo Green 1.5V | | | |
| Negative terminal of the battery is connected to 6 bars of steel, positive terminal of the battery connected to the MMO titanium ribbon anode | | | |
| MMO titanium ribbon is placed in a conductive gel in the concrete sample. | | | |
| Initial voltage of battery 1.571V for the Original Battery in as received condition. | | | |
| **Date** | **Time** | **Current mA** | **Voltage V** |
| 24/09/2015 | 10:48 | 3.8 | |
| 24/09/2015 | 10:49 | 1.27 | |
| 24/09/2015 | 10:50 | 1.5 | |
| 24/09/2015 | 10:51 | 1.29 | |
| 24/09/2015 | 10:52 | 1.277 | 1.542 |
| 24/09/2015 | 10:53 | 1.273 | |
| 24/09/2015 | 10:55 | 1.24 | |
| 24/09/2015 | 10:59 | 1.183 | |
| 24/09/2015 | 11:08 | 1.166 | |
| 24/09/2015 | 11:17 | 1.241 | |
| 24/09/2015 | 11:42 | 1.243 | |
| 24/09/2015 | 12:04 | 1.258 | |
| 24/09/2015 | 12:08 | 1.256 | |
| 24/09/2015 | 12:10 | 1.258 | |
| 24/09/2015 | 12:11 | 1.259 | |
| 24/09/2015 | 12:21 | 1.262 | |
| 24/09/2015 | 12:57 | 1.268 | |

**TABLE 2**

| Recharged Igo battery connected back to the Ti MMO | | |
|---|---|---|
| Initial Voltage 1.569V | | |
| **Date** | **Time** | **Current mA** |
| 25/09/2015 | 9:02 | 2.731 |
| 25/09/2015 | 9:03 | 1.95 |
| 25/09/2015 | 9:04 | 1.821 |
| 25/09/2015 | 9:05 | 1.762 |
| 25/09/2015 | 9:06 | 1.725 |
| 25/09/2015 | 9:07 | 1.697 |
| 25/09/2015 | 9:10 | 1.64 |
| 25/09/2015 | 9:16 | 1.575 |
| 25/09/2015 | 9:25 | 1.519 |
| 25/09/2015 | 9:39 | 1.449 |
| 25/09/2015 | 9:55 | 1.385 |
| 25/09/2015 | 10:17 | 1.351 |
| 25/09/2015 | 10:32 | 1.339 |
| 25/09/2015 | 10:56 | 1.324 |
| 25/09/2015 | 11:03 | 1.321 |

**TABLE 3**

| Zinc rod anode (not according to the invention) | | | |
|---|---|---|---|
| Area of Zinc exposed 6cm2 | | | |
| Battery Igo Green 1.5V AA size | | | |
| Negative terminal as marked on the battery is connected to 6 bars of steel, positive terminal of the battery connected to the zinc rod anode. | | | |
| Zinc rod is placed in a conductive gel (lithium hydroxide, carboxymethylcellulose and water) in the concrete reservoir. | | | |
| Original Battery: Initial voltage of battery 1.5694V (as received) | | | |
| **Date** | **Time** | **Current mA** | **Voltage V** |
| 22/09/2015 | 9:27 | 7.505 | |
| 22/09/2015 | 9:29 | 6.737 | |
| 22/09/2015 | 9:30 | 6.678 | |
| 22/09/2015 | 9:31 | 6.642 | |
| 22/09/2015 | 9:32 | 6.613 | 1.542 |
| 22/09/2015 | 9:33 | 6.58 | |
| 22/09/2015 | 9:34 | 6.561 | |
| 22/09/2015 | 9:38 | 6.518 | |
| 22/09/2015 | 9:40 | 6.498 | |
| 22/09/2015 | 9:47 | 6.38 | |
| 22/09/2015 | 10:01 | 6.377 | |
| 22/09/2015 | 10:01 | 6.332 | |
| 22/09/2015 | 10:15 | 6.294 | |
| 22/09/2015 | 10:26 | 6.273 | |
| 22/09/2015 | 10:34 | 6.245 | |
| 22/09/2015 | 11:29 | 6.191 | |
| 22/09/2015 | 11:46 | 6.176 | |
| 22/09/2015 | 11:48 | 6.174 | 1.523 |
| 22/09/2015 | 11:52 | 6.172 | |

### TABLE 4 (not according to the invention)

| Recharged Igo battery connected back to the zinc rod anode | | | |
|---|---|---|---|
| Initial Voltage 1.644V | | | |
| **Date** | **Time** | **Current mA** | **Voltage V** |
| 25/09/2015 | 11:48 | 9.222 | |
| 25/09/2015 | 11:49 | 8.268 | |
| 25/09/2015 | 11:50 | 8.07 | |
| 25/09/2015 | 11:51 | 7.975 | |
| 25/09/2015 | 11:53 | 7.864 | |
| 25/09/2015 | 11:55 | 7.795 | |
| 25/09/2015 | 12:09 | 7.522 | |
| 25/09/2015 | 12:22 | 7.308 | |
| 25/09/2015 | 12:51 | 7.219 | |
| 25/09/2015 | 13:24 | 7.107 | 1.576 |
| 25/09/2015 | 13:48 | 7.041 | |
| 25/09/2015 | 14:07 | 7.015 | |

## Claims

1. A method for cathodically protecting and/or passivating a metal section in an ionically conductive material (41), comprising:
providing a non-sacrificial anode (44) for communication of an electrical current to the metal section (40) in the ionically conductive material where the non-sacrificial anode (44) is of a material which is not sacrificial to the metal section;
providing a storage component of electrical energy with two poles (42, 43) for communicating electrical current generated by release of the electrical energy;
wherein the storage component is contained within an outer casing (12) having an exterior surface;
electrically connecting one pole (42) to the metal section (40), electrically connecting the other pole (43) to the non-sacrificial anode and placing the non-sacrificial anode (44) in ionic contact with the ionically conductive material (41) such that the electrical current can flow from the storage component through the electrical connection (42A) to the metal section (40) thus reducing a total amount of electrical energy contained in the storage component;
wherein the non-sacrificial anode (44) is defined on the exterior surface of the outer casing (12) so that the storage component is connected as a common single unit with the non-sacrificial anode;
and placing the non-sacrificial anode (44) in ionic communication with the ionically conductive material (41).

2. The method according to claim 1 wherein the metal section (40) is steel and the ionically conductive material (41) is concrete or mortar.

3. The method according to claim 1 or 2 wherein the non-sacrificial anode (44) and the storage component are both at least partly contained in the ionically conductive material (41).

4. The method according to any one of claims 1 to 3 wherein the storage component is a cell (49A) or battery (49) of cells.

5. The method according to any one of claims 1 to 3 wherein the storage component is a capacitor (120).

6. The method according to any one of claims 1 to 5 wherein the non-sacrificial anode comprises stainless steel.

7. The method according to any one of claims 1 to 6 wherein, after a period of operation, the storage component is replaced in the outer casing with a replacement storage component to provide additional electrical energy.

8. The method according to any preceding claim wherein replacement electrical energy is introduced into the storage component while the non-sacrificial anode (44) is in contact with the ionically conductive material (41).

9. The method according to claim 8 wherein the replacement electrical energy is introduced by re-charging the storage component.

10. An assembly for cathodically protecting and/or passivating a steel metal section (40) in an ionically conductive material (41), comprising:
a non-sacrificial anode (44) of a material which is not sacrificial to steel;
a storage component of electrical energy with two poles (42, 43) for communicating electrical current generated by release of the electrical energy;
wherein the storage component is contained within an outer casing (12) having an exterior surface;
an arrangement (42A) for electrically connecting one pole (42) to the metal section (40);
an arrangement for electrically connecting the other pole (43) to the non-sacrificial anode;
the assembly being arranged for placing the non-sacrificial anode (44) in ionic contact with the ionically conductive material (41) such that electrons can flow from the storage component through the electrical connecting arrangement (42A) to the metal section (40);
wherein the non-sacrificial anode (44) is defined on the exterior surface of the outer casing (12) so that the storage component is connected as a single unit with the non-sacrificial anode (44).

11. The assembly according to claim 10 wherein the anode comprises stainless steel.

12. The assembly according to claim 10 or 11 wherein the storage component is a cell (49A) or battery (49) of cells.

13. The assembly according to any one of claims 10 to 12 wherein the storage component is a capacitor (120).

## Patentansprüche

1. Verfahren zum kathodischen Schützen und/oder Passivieren eines Metallabschnitts in einem ionisch leitfähigen Material (41), umfassend:
Bereitstellen einer Nicht-Opferanode (44) zur Kommunikation eines elektrischen Stroms an den Metallabschnitt (40) in dem ionisch leitfähigen Material, wobei die Nicht-Opferanode (44) aus einem Material ist, das gegenüber dem Metallabschnitt keine Opferfunktion übernimmt;
Bereitstellen einer Speicherkomponente für elektrische Energie mit zwei Polen (42, 43) zum Kommunizieren von elektrischem Strom, der durch Abgabe der elektrischen Energie erzeugt wird;
wobei die Speicherkomponente in einem Außengehäuse (12) mit einer Außenoberfläche enthalten ist;
elektrisches Verbinden eines Pols (42) mit dem Metallabschnitt (40), elektrisches Verbinden des anderen Pols (43) mit der Nicht-Opferanode, und Platzieren der Nicht-Opferanode (44) in ionischem Kontakt mit dem ionisch leitfähigen Material (41), so dass der elektrische Strom von der Speicherkomponente durch die elektrische Verbindung (42A) zu dem Metallabschnitt (40) fließen kann, wodurch eine Gesamtmenge an elektrischer Energie reduziert wird, die in der Speicherkomponente enthalten ist;
wobei die Nicht-Opferanode (44) auf der Außenoberfläche des Außengehäuses (12) definiert ist, so dass die Speicherkomponente als gemeinsame einzige Einheit mit der Nicht-Opferanode verbunden ist;
und Platzieren der Nicht-Opferanode (44) in ionischer Kommunikation mit dem ionisch leitfähigen Material (41).

2. Verfahren nach Anspruch 1, wobei der Metallabschnitt (40) Stahl ist und das ionisch leitfähige Material (41) Beton oder Mörtel ist.

3. Verfahren nach Anspruch 1 oder 2, wobei die Nicht-Opferanode (44) und die Speicherkomponente beide mindestens teilweise in dem ionisch leitfähigen Material (41) enthalten sind.

4. Verfahren nach einem der Ansprüche 1 bis 3, wobei die Speicherkomponente eine Zelle (49A) oder Batterie (49) von Zellen ist.

5. Verfahren nach einem der Ansprüche 1 bis 3, wobei die Speicherkomponente ein Kondensator (120) ist.

6. Verfahren nach einem der Ansprüche 1 bis 5, wobei die Nicht-Opferanode Edelstahl umfasst.

7. Verfahren nach einem der Ansprüche 1 bis 6, wobei die Speicherkomponente in dem Außengehäuse nach einer Betriebsperiode durch eine Ersatzspeicherkomponente ersetzt wird, um zusätzliche elektrische Energie bereitzustellen.

8. Verfahren nach einem der vorhergehenden Ansprüche, wobei elektrische Ersatzenergie in die Speicherkomponente eingebracht wird, während die Nicht-Opferanode (44) in Kontakt mit dem ionisch leitfähigen Material (41) ist.

9. Verfahren nach Anspruch 8, wobei die elektrische Ersatzenergie durch Wiederaufladen der Speicherkomponente eingebracht wird.

10. Baugruppe zum kathodischen Schützen und/oder Passivieren eines Stahlmetallabschnitts (40) in einem ionisch leitfähigen Material (41), umfassend:
eine Nicht-Opferanode (44) aus einem Material, das gegenüber Stahl keine Opferfunktion übernimmt;
eine Speicherkomponente für elektrische Energie mit zwei Polen (42, 43) zum Kommunizieren von elektrischem Strom, der durch Abgabe der elektrischen Energie erzeugt wird;
wobei die Speicherkomponente in einem Außengehäuse (12) mit einer Außenoberfläche enthalten ist;
eine Anordnung (42A) zum elektrischen Verbinden eines Pols (42) mit dem Metallabschnitt (40);
eine Anordnung zum elektrischen Verbinden des anderen Pols (43) mit der Nicht-Opferanode;
wobei die Baugruppe zum Platzieren der Nicht-Opferanode (44) in ionischen Kontakt mit dem ionisch leitfähigen Material (41) angeordnet ist, so dass Elektronen von der Speicherkomponente durch die elektrische Verbindungsanordnung (42A) zu dem Metallabschnitt (40) fließen können;
wobei die Nicht-Opferanode (44) auf der Außenoberfläche des Außengehäuses (12) definiert ist, so dass die Speicherkomponente als einzige Einheit mit der Nicht-Opferanode (44) verbunden ist.

11. Baugruppe nach Anspruch 10, wobei die Anode Edelstahl umfasst.

12. Baugruppe nach Anspruch 10 oder 11, wobei die Speicherkomponente eine Zelle (49A) oder Batterie (49) von Zellen ist.

13. Baugruppe nach einem der Ansprüche 10 bis 12, wobei die Speicherkomponente ein Kondensator (120) ist.

## Revendications

1. Procédé de protection et/ou passivation cathodique d'une section métallique dans un matériau conducteur ionique (41), comprenant :
l'obtention d'une anode non sacrificielle (44) pour la communication d'un courant électrique à la section métallique (40) dans le matériau conducteur ionique, l'anode non sacrificielle (44) étant dans un matériau qui n'est pas sacrificiel pour la section métallique ;
l'obtention d'un composant de stockage d'énergie électrique avec deux pôles (42, 43) pour la communication d'un courant électrique généré par libération de l'énergie électrique ;
le composant de stockage étant contenu à l'intérieur d'un boîtier externe (12) ayant une surface extérieure ;
le branchement électrique d'un pôle (42) à la section métallique (40), le branchement électrique de l'autre pôle (43) à l'anode non sacrificielle et la mise de l'anode non sacrificielle (44) en contact ionique avec le matériau conducteur ionique (41), de sorte que le courant électrique peut circuler depuis le composant de stockage à travers le branchement électrique (42A) jusqu'à la section métallique (40), ce qui réduit ainsi une quantité totale d'énergie électrique contenue dans le composant de stockage ;
l'anode non sacrificielle (44) étant définie sur la surface extérieure du boîtier externe (12), de sorte que le composant de stockage est branché sous la forme d'une seule unité commune avec l'anode non sacrificielle ;
et la mise de l'anode non sacrificielle (44) en communication ionique avec le matériau conducteur ionique (41).

2. Procédé selon la revendication 1 dans lequel la section métallique (40) est de l'acier et le matériau conducteur ionique (41) est du béton ou du mortier.

3. Procédé selon la revendication 1 ou 2 dans lequel l'anode non sacrificielle (44) et le composant de stockage sont tous deux au moins partiellement contenus dans le matériau conducteur ionique (41).

4. Procédé selon l'une quelconque des revendications 1 à 3 dans lequel le composant de stockage est une cellule (49A) ou une batterie (49) de cellules.

5. Procédé selon l'une quelconque des revendications 1 à 3 dans lequel le composant de stockage est un condensateur (120).

6. Procédé selon l'une quelconque des revendications 1 à 5 dans lequel l'anode non sacrificielle comprend de l'acier inoxydable.

7. Procédé selon l'une quelconque des revendications 1 à 6 dans lequel, après une période de fonctionnement, le composant de stockage est remplacé dans le boîtier externe par un composant de stockage de remplacement pour fournir de l'énergie électrique supplémentaire.

8. Procédé selon une quelconque revendication précédente dans lequel de l'énergie électrique de remplacement est introduite dans le composant de stockage pendant que l'anode non sacrificielle (44) est en contact avec le matériau conducteur ionique (41).

9. Procédé selon la revendication 8 dans lequel l'énergie électrique de remplacement est introduite par recharge du composant de stockage.

10. Ensemble pour la protection et/ou passivation cathodique d'une section métallique en acier (40) dans un matériau conducteur ionique (41), comprenant :
une anode non sacrificielle (44) dans un matériau qui n'est pas sacrificiel pour l'acier ;
un composant de stockage d'énergie électrique avec deux pôles (42, 43) pour la communication d'un courant électrique généré par libération de l'énergie électrique ;
le composant de stockage étant contenu à l'intérieur d'un boîtier externe (12) ayant une surface extérieure ;
un agencement (42A) pour le branchement électrique d'un pôle (42) à la section métallique (40) ;
un agencement pour le branchement électrique d'un autre pôle (43) à l'anode non sacrificielle ;
l'ensemble étant agencé pour mettre l'anode non sacrificielle (44) en contact ionique avec le matériau conducteur ionique (41), de sorte que des électrons peuvent circuler depuis le composant de stockage à travers l'agencement de branchement électrique (42A) jusqu'à la section métallique (40) ;
dans lequel l'anode non sacrificielle (44) est définie sur la surface extérieure du boîtier externe (12), de sorte que le composant de stockage est branché sous la forme d'une seule unité avec l'anode non sacrificielle (44).

11. Ensemble selon la revendication 10 dans lequel l'anode comprend de l'acier inoxydable.

12. Ensemble selon la revendication 10 ou 11 dans lequel le composant de stockage est une cellule (49A) ou une batterie (49) de cellules.

13. Ensemble selon l'une quelconque des revendications 10 à 12 dans lequel le composant de stockage est un condensateur (120).
